(19) Europäisches Patentamt
European Patent Office
Office européen des brevets

(11) Publication number: **0 434 011 A1**

# (12) EUROPEAN PATENT APPLICATION

(21) Application number: **90124712.2**

(22) Date of filing: **19.12.90**

(51) Int. Cl.5: **C08L 101/00**, C09K 3/16, //(C08L101/00,71:02)

(30) Priority: **21.12.89 US 454230**

(43) Date of publication of application: **26.06.91 Bulletin 91/26**

(84) Designated Contracting States: **AT BE CH DE DK ES FR GB GR IT LI LU NL SE**

(71) Applicant: **The B.F. Goodrich Company**
**3925 Embassy Parkway**
**Akron Ohio 44313(US)**

(72) Inventor: **Yu, Simon Hsiao-Pao**
**1812 Farr's Garden Path**
**Westlake, Ohio 44145(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

## (54) Additive for imparting electrostatic dissipative properties in plastic materials and method relating thereto.

(57) The present invention relates generally to a class of polymeric electrolyte materials which can be blended with any one of a number of common polymers to provide an end product having advantageous electrostatic dissipative ("ESD") properties. More specifically, the present invention is preferably directed to a complex comprising a polyether base material and an ionizable salt additive. Unlike many conventionally known antistatic agents, the electrolyte material of the present invention is capable of providing both surface and volume conductivity and generally does not impair the physical properties of the polymer with which it is blended.

EP 0 434 011 A1

# ADDITIVE FOR IMPARTING ELECTROSTATIC DISSIPATIVE PROPERTIES IN PLASTIC MATERIALS AND METHOD RELATING THERETO

(1) Field of the Invention

The present invention relates generally to a class of polymeric electrolyte materials which can be blended with any one of a number of common, compatible polymers to provide an end product having advantageous electrostatic dissipative ("ESD") properties.

More specifically, the present invention is preferably directed to an antistatic polymer solution additive comprising a polyether base material and an ionizable salt. Unlike many conventionally known antistatic agents, the electrolyte material of the present invention is capable of providing both surface and volume conductivity and generally does not significantly impair the physical properties of the polymer with which it is blended. Furthermore, the antistatic performance is substantially permanent and relatively insensitive to humidity.

(2) Background Of The Invention

Electricity will generally flow from a high to a low potential. The earth's electric potential (often called "ground") is generally much lower than that of a static charge, and therefore static charges generally tend to flow to ground.

The electrostatic properties of most materials can be described as either conductive, dissipative or insulative. When a static charge is placed upon a grounded conductive material, the charge will quickly flow to ground, sometimes causing a spark or sudden surge of voltage through the material. When a charge is placed upon a grounded dissipative (sometimes called "antistatic") material, the charge will slowly "bleed" to ground, generally without causing a spark or any sudden increase in voltage through the material. When a charge is place upon an insulative material, the charge will generally not move through the material but will build up until it is able to arc across the insulator or find an alternative pathway to ground.

Due to their chemical composition, most polymeric materials are insulators, and therefore static charge will generally build up or accumulate on such materials. This gives rise to numerous problems in various industrial applications, because static build up and sudden discharge can cause explosions, annoy persons handling the materials or cause damage to sensitive electronic components.

Electronic devices and the like have become increasingly sensitive to even low levels of electrostatic discharge. Only a few hundred volts can sometimes cause damage to today's sensitive electronic components. The damage caused by electrostatic discharge is generally not accompanied by a noticeable shock or visible spark. Furthermore, the effect of static charge on electronic components can be latent and can occur after having passed an "inspection" in a factory or the like. Static discharge can cause erratic computer errors, can erase or partially erase a computer memory or otherwise interfere with the operation of the computer.

To combat and control static discharge, some facilities use antistatic plastics. These plastics have electrostatic dissipative ("ESD") properties which allow any static charge which contacts the plastic to slowly and harmlessly bleed to ground. Such materials are generally useful during the manufacturing process and also for storing and shipping products sensitive to static charge.

A number of antistatic agents are known in the art. Sometimes the antistatic agent is applied to the surface of a polymeric article by means of spraying or dipping. Such methods are often problematic however, because they are generally labor-intensive, and the coating is oftentimes not durable. Also, the antistatic coating is generally prone to removal by cleaning, normal wear, or even evaporation over time.

Low molecular weight antistatic agents are also sometimes blended with the material rather than coated on the surface. Such low molecular weight antistatic agents include:

1. ethoxylated fatty amines, ester, or amides such as those described in U.S. Patents 3,631,162; 3,591,563; 3,575,903; 3,441,552; 3,441,552; and 3,270,650; 3,468,702; 3,454,494; 3,365,437; 3,223,545; and 3,206,429;

2. quaternary ammonium salts such as those described in U.S. Patents 3,933,871; 3,862,045; 3,850,818; 3,395,100; 3,324,091; and 3,272,648; or

3. alkylsulphonates, sulphates or phosphates such as those described in U.S. Patents 3,475,203 and 3,446,651, and Japanese Patents 82-30,756; 82-202,338; and 73-14,651

Low molecular weight antistatic agents blended into a polymeric material are generally organic compounds comprising a hydrophobic component and a hydrophilic component. The hydrophobic component generally provides compatibility with the particular polymer and thereby links the two materials together. The hydrophilic component generally absorbs moisture and causes water to be uniformly distributed on the surface of the particular polymer. This water film formed on the surface increases surface conductivity by means of an ion conduction process, thereby increasing the rate of static charge dissipation. Consequently, conventional low molecular weight internal antistats generally do not improve volume conductivity of the polymer and are generally sensitive to atmospheric humidity, typically providing poor performance at low humidity.

Internal, low molecular weight antistatic agents are generally designed to migrate from the interior of the polymer to the surface during or after molding. Gradual surface migration can be advantageous, since it can replace any antistatic agent at the surface which is lost due to evaporation, cleaning or wear. However, the migration must occur at the proper rate-- if too fast, the migration can cause blooming, surface smearing and molding difficulties; if too slow, the antistatic properties will be erratic, since any lost antistatic agent is not promptly replaced. Slow migration is a problem prevalent in polymers having high crystallinity, such as polypropylene, and migration may take up to about a month after molding to reach maximum antistatic performance.

Some antistatic agents, such as quaternary ammonium salts, are not able to withstand processing temperatures required in conventional fabricating or molding steps for some polymers. Furthermore, antistatic agents are generally cationic or anionic, and this tends to cause the degradation of certain polymers, such as N,N-bis(ethanol)alkylamine for PVC, particularly at processing temperatures. Additionally, conventional low molecular weight antistatic agents often tend to lose their antistatic effectiveness due to evaporation, or they cause undesirable odors or promote cracking or crazing.

Recently, a new concept to control static electricity has been developed wherein a high molecular weight polymeric antistatic additive is used as an alloying agent which imparts antistatic properties. Such polymeric antistatic additives are generally polyethers, see for example, U.S. Patents 4,775,716 to Kipouras et. al; 4,719,263 to Barnhouse et. al; 4,588,773 to Federal et. al., or European Patent Applications 287,092 and 282,985 to Yu.

Antistatic polyether polymer alloys generally provide excellent antistatic properties without many of the disadvantages described above relating to low molecular weight antistatic agents. However, since the end product is a blend, the antistatic performance and the mechanical properties of the final composition are greatly dependent upon the compatibility of the polymer and the polyether. In some cases, a large amount of the antistatic material is necessary for rapid dissipation of static electrical charges. However, at high levels, the mechanical properties of the original polymer are oftentimes detrimentally effected. U.S. Patent 4,857,590 to Gaggar, at. al. teaches the addition of an acrylate polymer to improve compatibility of polyether with polystyrene or its copolymers.

Conductive fillers including carbon black; graphite fibers or metal-coated graphite fibers; inorganic materials such as aluminum, nickel, or silver flakes or fibers; metallized glass fibers and stainless steel fibers are compounded with polymers as an alternative to the conventional low molecular weight organic antistatic agents to improve not only surface conductivity but also volume conductivity. However, most conductive fillers are rather expensive and require relatively high loadings which can severely impair the mechanical properties of the polymer. The incorporation of those fillers also generally gives undesirable surface properties and hinders color coding and matching. In certain cases, such as in the use of carbon black, contamination of sensitive microelectronic components can be problematic due to sloughing.

To improve polymer conductivity, particularly for polyvinyl chloride, a method of incorporating at least 0.007% by weight of an inorganic highly ionic salt is described in U.S. Patent 4,230,604 to Wingrave. However, the improvement is generally small, and the low conductivity is generally not suitable for controlling static electricity.

A process for producing thermoplastic articles having an antistatic coating is described in U.S. Patent 4,743,476 to Miller. The process involves immersing the thermoplastic articles in an organic solution of a metallic salt.

UK Patent Application 2,139,230A to Monma et al. describes an electrically conductive polymer composition comprising a polymer, up to 10 weight parts of a water-soluble inorganic salt, and up to 10 weight parts of a water-soluble second polymer. Examples of water-soluble polymers are polyethylene glycol, polyvinyl alcohol, and polymethacrylate; examples of inorganic salts are metallic halides and metallic salts of thiocyanic acid.

U.S. Patents 4,806,571, 4,618,630, and 4,617,325 all to Knobel et al. describe polymer compositions comprising at least one ionizable salt and an enhancer. The enhancer is described as a compound which does not substantially increase the conductivity of the polymer by itself in the absence of an ionizable salt. The enhancers used in these patents are generally plasticizers, and plasticizers will generally soften the

polymer and can impair mechanical properties.

Solid polymer electrolytes are generally solid solutions of an ionic compound fully dissolved in a host polymeric material. They are ionic conductive rather than electronic conductive and generally exhibit excellent conductivity in the range of $10^{-6}$ to $10^{-1}$ S $cm^{-1}$, which is characteristic of dilute aqueous ionic solutions and is also generally better than that of typical ionic solids such as NaC1.

The field of solid polymer electrolytes has recently been reviewed by Rather and Shriver in "Ion Transport in Solvent-Free Polymers", Chem. Rev., 88, 109-124 (1988), and by MacCallum and Vincent in "Polymer Electrolyte Reviews", Vol 1, Elsevier, London, 1987. Polymer electrolytes based on complexes of salts with copolymers of ethylene oxide and a cyclic ether oxide are described in U.S. Patents 4,683,181 and 4,578,326 both to Armand, et. al. Polymer electrolytes based on complexes of salts with low molecular weight copolymers of ethylene oxide and propylene oxide glycols are described in Japanese Patent 62-249,361.

Polymer electrolytes based on complexes of salts with comb-like copolymers with pendent polyethylene oxide chains are described in U.S. Patent 4,798,773 to Yasukawa, et. al., WO Patent 85/02718 to Ward et. al., Polymer, 25, 1600 (1984) by Bannister, et. al., and J. Polym. Sci.. Polym. Phy. ED., 22, 617 (1984) and Solid State Ionics, 14, 221 (1984) both by Smid, et. al. for comb copolymers prepared by free-radical copolymerization of a macromer of polyethylene oxide ("PEO"); J. Amer. Chem. Soc., 106, 6854 (1984) and Solid State Ionics, 18/19, 258 (1986) both by Shriver, et. al., and U.S. Patent 4,656,246 to Chang for comb copolymers of polyphosphazene with pendent PEO chains; Makromol. Chem.. Rapid Commun., 7, 115 (1986) by Smid, et. al. and J. Power Sources, 20, 327 (1984) by Watanabe, et. al. for comb copolymers of polydimethylsiloxane with pendent PEO chains.

Polymer electrolytes based on complexes of salts with block or segmented copolymers of a cyclic ether are described in (1) Macromolecules, 16, 665 (1984) by Robitaille, et. al. for a linear block copolymer of poly(ethylene oxide - isoprene - propylene oxide); (2) J. Polym. Sci., Polym. Lett. Ed., 22, 659 (1984) by Watanabe et. al. for segmented copolymers of poly(dimethylsiloxane - ethylene oxide); (3) Solid State Ionics, 28/30, 994 (1988) by Linden et. al. for segmented copolymers of poly(oxyethylene - oxymethylene); (4) U.S. Patent 4,357,401 to Andre for polyurethanes prepared from polyether polyols and polyisocyanates.

To improve the mechanical properties, the polymer electrolyte base can be made of a random graft copolymer having other monomers grafted onto a polyether backbone. This is generally done by polymerizing monomer in the presence of a polyether as described in: (1) U.S. Patent 4,654,279 to Bauer, et al. for graft copolymers with 20 to 55 weight percent of polyepoxides and with polyurethanes, polymethacrylates, polyacrylates, polyacrylonitriles, or polystyrenes as a supporting phase, and (2) British Patent Application 8,619,049 to Gray et al. for graft copolymers with polystyrenes as a supporting phase.

Also to improve the mechanical properties of a polymer electrolyte, several polymer electrolyte blends having a polyether base and a second polymer acting as mechanical support have been developed, for example, as described in (1) U.S. Patent 4,471,037 to Bannister et al. for the blends a salt complex of poly-(vinyl methyl ether) with another polymer, (2) Solid State Ionics, 11, 227 (1983) by Tsuchida et al. for the blends with poly(methacrylic acid), and (3) U.S. Patent 4,556,614 to Mehaute et al. for the blends with crosslinked elastomers. Blends of a polymer electrolyte based on polyesters with a second polymer acting as mechanical support have been developed, for example, as described in Electrochim. Acta, 29, 1443 (9184) by Armstrong et al. for the blends of poly(vinyl acetate) with a salt complex of poly(ethylene adipate). One serious problem associated with the blends of a polymer electrolyte of polyethers with a second polymer is the miscibility of the components. Difficulties arise in avoiding serious phase separation which causes the disruption of the continuity of the conductive network.

The utilization of solid polymer electrolytes has been taught, for example, in U.S. Patent 4,303,748 to Armand et al. and U.S. Patents 4,722,877 and 4,807,977 both to Sammells for high energy density batteries, in U.S. Patent 4,352,868 to Skotheim for solid-state photoelectrochemical cells, in U.S. Patent 4,473,492 to Schmolka for medical electrode cream to transmit an electrical current from human body to the recording equipment, in U.S. Patent 4,638,407 to Lundsgaard for all solid state double layer capacitor, and in U.S. Patents 4,661,211 to Petty-Weeks and 4,689,122 to Polak for sensors. None of those references however teach the use of polymer electrolytes for electrostatic dissipative ("ESD") applications.

## SUMMARY OF THE INVENTION

The present invention is directed to an electrostatic dissipative ("ESD") additive which can be easily incorporated into a plastic material to provide the plastic material with ESD properties by means of both surface and volume resistivity. The ESD additive comprises a macromolecular poly(alkyleneoxide) base material having an inherent solution viscosity greater than 0.25 g/ml as determined on a solution made up

with 0.25 grams of the polymer in 100 milliliter of toluene with capillary viscometer at 25° C according to ASTM D2857 or a Mooney viscosity number ($ML_{1+4}$ at 100° C) greater than 3 according to ASTM D1646 and an organic or inorganic ionizable salt. The ratio of the number of oxygens in the poly(alkylene oxide) to the number of anions in the ionizable salt is preferably in the range of about 4:1 to about 150:1. The macromolecular poly(alkylene oxide) generally have a weight average molecular weight from about 10,000 to about 50,000,000 as determined by GPC if soluble. The ESD additive preferably has a volume resistivity of about $10^4$ to $10^{13}$ ohm-cm and a surface resistivity in the range from $10^4$ to $10^{13}$ ohm/sq. according to ASTM D257-78.

In one embodiment of the present invention, the ESD additive is in a free flowing particulate form, preferably at least about 70% by weight of the particles are in the range of about .1 mm to about 1.5 cm in diameter.

In another embodiment of the present invention, the invention is directed to an antistatic composition comprising the ESD additive and any one of a number of polymer materials, wherein the poly(alkylene oxide) in the ESD additive has an inherent solution viscosity greater than 0.25 g/ml as determined on a solution made up with 0.25 grams of poly(alkylene oxide) in 100 milliliter of toluene with capillary viscometer at 25° C according to ASTM D2857 or a Mooney viscosity number ($ML_{1+4}$ at 100° C) greater than 3 according to ASTM D1646.

In another embodiment the ESD additive is used as part of an antistatic coating composition.

## DETAILED DESCRIPTION OF THE PREFERRED EMBODIMENT

The present invention is directed to an ionic compound which is fully dissolved in a macromolecular material, thereby providing a solid solution having ionic conductivity. The macromolecular material of this invention comprises about 10% to 100% by weight polyalkylene oxide.

Polyalkylene oxides can be homopolymer or copolymer of an alkylene oxide, and can be linear or branched, crosslinked or non-crosslinked (preferably non-crosslinked or slightly crosslinked). The copolymer can be random, block, alternating, graft, or segmented.

The macromolecular material is a polyalkylene oxide wholly or partially derived from the polymerization of one or more cyclic ethers having a three-membered ring selected from:

(A) mono-substituted 1,2-epoxides having the structure

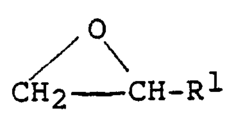

(I)

wherein, $R^1$ is selected from the group consisting of hydrogen, $C_1$-$C_{20}$ alkyl, alkenyl, haloalkyl and haloalkenyl; and $C_6$-$C_{20}$ aryl, alkylaryl, alkenylaryl, aralkyl and aralkenyl; and

(B) aliphatic or aromatic glycidyl ethers having the structure

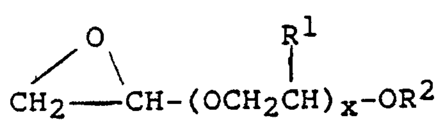

(II)

wherein, $R^2$ is selected from the group consisting of $C_1$-$C_{20}$ alkyl, alkenyl, haloalkyl and haloalkenyl; and $C_6$-$C_{20}$ aryl, alkylaryl, alkenylaryl, aralkyl, and aralkenyl; and wherein x is a integer from 0 to 30.

Exemplary of the alkylene oxides which are represented by the above structural formula I are: ethylene oxide; 1,2-epoxypropane(propylene oxide); 1,2-epoxybutane; 1,2-epoxypentane; 1,2-epoxyhexane; 1,2-epoxyheptane; 1,2-epoxydecane; 1,2-epoxydodecane; 1,2-epoxyoctadecane; 7-ethyl-1,2-epoxy epoxyundecane; 4,6,8-trimethyl-1,2epoxynonane; styrene oxide; 4-methoxystyrene oxide; 4-methyl-styrene oxide.

Typical halogen-substituted alkylene oxide represented by the above formula I are:

3-chloro-1,2-epoxypropane; 3-bromo-1,2-epoxypropane; 3-iodo-1,2-epoxypropane; 3-fluoro-1,2-epoxypropane; 3-chloro-1,2-epoxybutane; 3,3-dichloro-1,2-epoxy-propane; 3,3,3-trichloro-1,2-epoxypropane; 3-bromo-1,2-epoxybutane; 3-fluoro-1,2-epoxybutane; 3-iodo-1,2-epoxybutane; 1,1-dichloro-1-fluoro-2,3-epoxypropane.

Typical alkylene oxides with at least one ether linkage represented by the formula II are exemplified by:

methyl glycidyl ether, ethyl glycidyl ether; n-butyl glycidyl ether; isobutyl glycidyl ether; t-butyl glycidyl ether; n-hexyl glycidyl ether; 2-ethylhexyl glycidyl ether; heptafluoroisopropyl glycidyl ether; phenyl glycidyl ether; 4-methyl phenyl glycidyl ether; benzyl glycidyl ether; 2-phenylethyl glycidyl ether; 1,2-dihydropentafluoroisopropyl glycidyl ether; 1,2-trihydrotetrafluoroisopropyl glycidyl ether; 1,1-dihydrotetrafluoropropyl glycidyl ether; 1,1-dihydrononafluoropentyl glycidyl ether; 1,1-dihydropentadecafluorooctyl glycidyl ether; 1,1-dihydropentadecafluorooctyl-α-methyl glycidyl ether; 1,1-dihydropentadecafluorooctyl-β-methyl glycidyl ether; 1,1-dihydropentadecafluorooctyl-α-ethyl glycidyl ether; 2,2,2-trifluoro ethyl glycidyl ether; and methoxyethoxyethyl glycidyl ether.

Typical unsaturated alkylene oxides represented by formula I or II are: allyl glycidyl ether; 4-vinylcylcohexyl glycidyl ether; α-terpinyl glycidyl ether; cyclohexenylmethyl glycidyl ether; p-vinylbenzyl glycidyl ether; allylphenyl glycidyl ether; vinyl glycidyl ether; 4,5-epoxy-1-pentene; 4,5-epoxy-2-pentene; butadiene monooxide.

The preferable cyclic ethers having a three-member ring are ethylene oxide, propylene oxide, and epichlorohydrin. The preferable ethylenically unsaturated cyclic ethers having a three-member ring to provide curable sites are allyl glycidyl ether.

The polyalkylene oxide can be a polyether, homopolymer or copolymer, linear or branched, crosslinked or non-crosslinked, random, block, or alternating derived from the polymerization of one or more cyclic ethers having a three-membered ring selected from mono-substituted 1,2-epoxide having the structure I and aliphatic or aromatic glycidyl ethers having the structure II.

The polyalkylene oxide can be a copolymer of polyether, poly(ether-ester), or poly(ether-acetal) derived from the polymerization of 1,2-epoxide of structure I or glycidyl ether of structure II with one or more other cyclic monomers.

Other cyclic monomers suitable to copolymerize are three-membered ring cyclic ether with two or more substituents containing up to 25 carbon atoms, such as 2,3-epoxybutane; 2,3-epoxypentane; 2,3-epoxyhexane; 3,4-epoxyhexane; 2-methyl-2,3-epoxybutane; 1,2-epoxycyclohexane; 3,4-epoxy-1-vinylcyclohexane; 1,2-epoxy-5-cyclooctene.

Other cyclic monomers suitable to copolymerize are three-membered ring cyclic ether with an ester linkage containing up to 25 carbon atoms, such as glycidyl acetate; glycidyl chloroacetate; glycidyl butylrate; glycidyl stearate; glycidyl acrylate; glycidyl methacrylate; glycidyl crotonate; and glycidyl 4-hexenoate.

Other cyclic monomers suitable to copolymerize are cyclic ethers with four or more member-ring containing up to 25 carbon atoms except tetrahydropyran. Exemplary cyclic ethers with four or more member-ring are oxetane (1,3-epoxide), tetrahydrofuran (1,5-epoxide), and oxepane (1,6-epoxide) and their derivatives.

Other suitable cyclic monomers are cyclic acetals containing up to 25 carbon atoms. Exemplary cyclic acetals are trioxane, dioxolane, 1,3,6,9-tetraoxacycloundecane, trioxepane, trioxocane, dioxepane, and their derivatives.

Other suitable cyclic monomers are cyclic esters containing up to 25 carbon atoms. Exemplary cyclic esters are epsilon-caprolactone, zeta-enantholactone, eta-caprylactone, butyrolactone and their derivatives.

The preferable copolymers of alkylene oxide polyether, poly(ether-ester), and poly(ether-acetal) are copolymers derived from the polymerization of ethylene oxide with one or more other cyclic monomers.

The polymerization process for alkylene oxides in general is already known in the art. Generally, one or more alkylene oxide and comonomers and the catalyst are contacted in the presence of an inert diluent. Further detailed description of the polymerization process may be found by reference to U.S. Patents 3,186,958; 3,640,908; 3,657,159; and 3,135,705.

Any epoxide polymerization catalyst can be used for polymerization of alkylene oxide to prepare antistatic additives of this invention. Epoxide polymerization catalysts known in the art are anionic catalyst, cationic catalyst, catalysts based on metal oxides, alkoxides, or carbonates, and coordination catalysts based on an organometallic compound. Among them, coordination catalysts are preferable. Exemplary of coordination catalysts based on an organoaluminum compound which has been modified with water or alcohol or diols, and/or a chelating agent have been described in U.S. Patents 3,135,705; 3,135,706; 3,219,591; 3,280,045; 3,058,923; 3,642,667; and 4,460,703; and German Patent 1,109,901

Exemplary of coordination catalysts based on an organoaluminum compound and a metal salt of a beta-diketone have been described in U.S. Patents 3,396,125; 3,457,197; 3,468,8670; 3,484,388; 3,506,597; and 3,925,317.

Exemplary of coordination catalysts based on an organoaluminum compound which has been modified with a phosphoric acid have been described in U.S. Patent 3,770,664 and Japanese Patent 50-124,999.

Exemplary of coordination catalysts based on an organozinc compound which has been modified with

water has been described in U.S. Patents 3,536,936; 3,284,374; 3,399,150; 3,385,800; and 3,639,267.

Exemplary of coordination catalysts based on an organomagnesium compound have been described in U.S. Patents 3,766,901; 3,770,655; and 3,450,603.

Exemplary of coordination catalysts based on mu-oxo-bismetallic trinuclear alkoxides have been described in U.S. Patents 3,432,445; and 3,657,149.

Exemplary of coordination catalyst based on metalloporphyrins has been described in U.S. Patents 4,774,356 and 4,654,417.

Exemplary anionic catalysts are potassium hydroxide and sodium hydroxide described in U.S. Patents 2,923,690 and 1,976,678; and German Patent 616,428; and British Patent 346,550.

Exemplary catalysts based on metal oxides, alkoxides, and(or) carbonates have been described in U.S. Patents 2,866,761 and 3,441,521; and British Patents 793,065 and 799,955.

Polymerization of the alkylene oxide is carried out using a coordination catalyst system and anhydrous conditions under nitrogen, preferably in an inert diluent. The process may be conducted as a batch or continuous process with a catalyst, monomer or monomers, and the inert diluent added simultaneously or in increments during the polymerization, or continuously throughout the polymerization. Alkylene oxide and one or more comonomers are preferably added to the reactor simultaneously or as a mixture, or premixed with the inert diluent before adding the mixture to the reactor, resulting in random copolymers. Alkylene oxide and comonomer or comonomers may be added to the reactor sequentially resulting in block copolymers.

Any diluent that is inert under the polymerization conditions can be used, such as for example: toluene; benzene; heptane; hexane; butane; cyclohexane; diethyl ether; chlorobenzene; methylenechloride; and ethylenedichloride. Obviously, any mixture of such diluents can be used and in many cases preferable. Depending upon the solubility of the copolymer formed in the diluent, the process could be solution polymerization or slurry polymerization.

The polymerization process can be carried out over a wide range of temperatures and pressures. Usually it will be carried out in a temperature range of about -50° C to about 200° C, and preferably within the range of from about -30° C to about 150° C, but generally can be carried out over a wide range of temperatures and pressures. Most preferably, the temperature range is from about 60° C to about 120° C. The copolymerization temperature can be controlled by jacket cooling/heating or reflux, or both. Usually the copolymerization process will be carried out at superatmostpheric pressure up to several hundred pounds per square inch, or, on the other hand, at subatmospheric or autogenous pressure. The pressure selected depends upon the comonomer selected and is well within the skill of the art to choose the applicable pressure and temperature.

The polyalkylene oxide copolymer can be a graft copolymer comprising about 10 to 85% by weight polyalkylene oxide, such as a comb-shaped copolymer having a hydrocarbon backbone with pendant chains of polyalkylene oxide prepared by free-radical polymerization of a macromer of polyalkylene oxide with at least one ethylenically unsaturated monomer, as described, for example, in U.S. Patents 4,543,390 to Tanaka et al, 4,384,078 to Ohya et. al., and 4,798,773 to Yasukawa, et. al., WO Patent 85/02718 to Ward et. al., Polymer, 25, 1600 (1984) by Bannister, et. al., and J. Polym. Sci.. Polym. Phy. Ed., 22, 617 (1984) and Solid State Ionics, 14, 221 (1984) both by Smid, et. al.

A macromer of polyalkylene oxide is a polyalkylene oxide, wholly or partially, derived from the polymerization of one or more three-membered ring cyclic ethers of structures I and II shown above having a weight average molecular weight determined by GPC from about 200 to about 20,000, terminated one end of the polymer chain with an ethylenically unsaturated functional group, such as acryloyl, styryl, or allyl groups, and another end with a hydroxyl or its derivatives, such as alkoxyl, aryloxy, aralkoxyl, trialkylsiloxy, etc. Suitable macromers of polyalkylene oxide has been described, for example, in U.S. Patent Re. 31,468 to Hsu; and U.S. Patents 4,722,978 and 4,680,358 both to Yu; and Japanese Patents 52-102,220 and 52-65,216 both to Tanizaki, et al. Most preferable macromers of polyalkylene oxide are the derivatives of polyethylene glycol, polypropylene glycol, poly(ethylene-epichlorohydrin) glycol and poly(ethylene-propylene) glycol terminated one end the polymer chain with an acryloyl or styryl functional group.

Ethylenically unsaturated monomers suitable for forming graft copolymers, for example, include: (i) $C_2$-$C_{12}$ vinyl monomers such as readily available vinyl chloride, vinyl acetate, acrylonitrile, ethylene, propylene, 4-vinyl pyridine, vinyl pyrrolidone, vinyl benzoic acid, ethyl vinyl ether, salts of vinyl sulfonate, vinylidene chloride, N-vinyl carbazole, and the like; (ii) $C_8$-$C_{16}$ styryl monomers such as styrene, 4-chlorostyrene, vinyl toluene, alpha-methyl styrene, and the like; (iii) alpha,beta-ethylenically unsaturated carboxylic acids, such as acrylic acid and methacrylic acid, having from 3 to 8 carbon atoms, and derivatives thereof selected from the group consisting of esters of $C_1$-$C_{20}$ alcohols such as ethyl acrylate, ethyl methacrylate, glycidyl acrylate, butyl acrylate, 2-hydroxyethyl acrylate, 2-ethylhexyl acrylate; acrylamide and amides of $C_1$-$C_{20}$

amines such as N,N-dimethylacrylamide; and metal salts such as sodium acrylate; and the corresponding analogs of methacrylates and methacrylamide; (iv) $C_4$-$C_8$ diene monomers such as butadiene and isoprene; and, (v) $C_5$-$C_{10}$ allylically unsaturated monomers such as allyl acetate, and diallylphthalate. Free-radical chain polymerization, commonly used in the art, as described in "Encyclopedia of Polymer Science and Technology" Vol 7, Interscience Publishers, New York (1967), is preferred. It is typically carried out with a free-radical initiator and can be carried out in bulk, mass, solution, slurry, emulsion, or dispersion polymerization.

Alternatively, the graft copolymer can be a comb-shaped copolymer comprising a polyphosphazene backbone with pendant chains of polyalkylene oxide as described, for example, in J. Amer. Chem. Soc., 106, 6854 (1984) and Solid State Ionics, 18/19, 258 (1986) both by Shriver, et al., and U.S. Patents 4,656,246 to Chang et al, and 4,258,173 to Schulz et al.

The comb-shaped graft copolymers are generally made by reacting a sodium polyether alkoxide with a polyphosphonitrilic chloride in tetrahydrofuran or by reacting a polyether alkanol with polyphosphonitrilic chloride in the presence of triethylamine. The most preferable polyalkylene oxides for the pendant chains are polyethylene oxide, polypropylene oxide, and copolymers of ethylene oxide and propylene oxide or epichlorohydrin.

Alternatively, the graft copolymer can be a comb-shaped copolymer comprising a polysiloxane backbone with pendant chains of polyalkylene oxide as described, for example in, Makromol. Chem.. Rapid Commun., 7, 115 (1986) by Smid, et al., J. Power Sources, 20, 327 (1984) by Watanabe, et al, and U.S. Patents 4,059,605 to Bennett, 3,798,253 to Rick et al., and 3,381,019 to Morehouse. The comb-shape graft copolymers are generally made by reacting a polyalkylene oxide terminated one end of the polymer chain with an alkenyl group with a polysiloxane containing silanic hydrogens in the presence of a Pt catalyst. The most preferable polyalkylene oxides are polyethylene oxide, polypropylene oxide, and copolymers of ethylene oxide and propylene oxide or epichlorohydrin.

Alternatively, the graft copolymer can comprise a polyether backbone with hydrocarbon pendant chains prepared by free-radical polymerization of at least one ethylenically unsaturated monomer such as vinyl chloride, styrene, acrylonitrile, acrylate and methacrylate esters in the presence of a polyalkylene oxide, preferably with ethylenically unsaturated group, as described, for example, in U.S. Patents 4,500,687 and 4,654,279 to Bauer, et al. and British Patent Application 8,619,049 to Gray et al.

The polyalkylene oxide macromolecular material of the present invention can also comprise a block or segmented copolymer wherein at least one block or one segment of the copolymer comprises at least one alkylene oxide repeating unit as described above as, for example, described in (1) Macromolecules, 16, 665 (1984) by Robitaille, et al. for a linear block copolymer of poly(ethylene oxide - isoprene - propylene oxide); (2) J. Polym. Sci., Polym. Lett. Ed., 22, 659 (1984) by Watanabe et al. and U.S. Patent 4,150,048 to Schilling Jr. et al for segmented copolymers of poly(dimethylsiloxane - alkylene oxide); (3) Solid State Ionics, 28/30, 994 (1988) by Linden et. al. for segmented copolymers of poly(oxyethylene - oxymethylene); (4) U.S. Patents 4,357,401 to Andre and 4,831,098 to Watanabe et al for polyurethanes prepared from polyether polyols and polyisocyanates; (5) U.S. Patents 4,828,927 to Timmerman et al and 3,963,803 to Tanaka et al for poly(ether-ester) segmented copolymers; (6) U.S. Patents 4,438,240 and 4,376,856 both to Tanaka et al for poly(ether-ester-amide) segmented terpolymers.

The ionizable salts useful for the purposes of the present invention can generally be represented by the following formula:

$$(M^{+a})_b(X^{-b})_a$$

in which $M^{+a}$ is a cation, such as a metal or ammonium ion and $x^{-b}$ is an anion of a strong acid wherein both a and b are integers from 1 to 3. Examples of suitable metal ions include ions of Li, Na, K, Rb, Cs, Be, Mg, Sr, Ba, Sc, Y, Ti, B, Cr, Mn, Fe, Co, Ni, Cu, Zn, Ga, Ge, Zr, Nb, Mo, Tc, Ru, Rh, Pd, Ag, Cd, In, Sn, Sb, Hf, Ta, W, Re, Os, Ir, Pt, Au, Hg, Tl, Pb, Bi, and Al. Examples of suitable anions include anions of F, Cl, Br or I.

Useful ionizable salts for the present invention are disclosed in U.S. Patents 4,303,748; 4,578,326; 4,556,616; and 4,620,944 to Armand et al., 4,357, 401 to Andre et al., 4,200,701 to Wetton et al., 4,654,279 to Bauer et al., and 4,556,614 to Mehaute et al.; and PCT Patent WO 85/02,718 to Ward et al.

The preferred ionizable salts of the present invention include those having the cation derived from Group IA, Group IIA, Group IIIA, Group IB, and Group IIB metals or is the ammonium ion and anion $x^{-b}$ is a

monovalent anion of a strong acid such as $Cl^-$, $Br^-$, $I^-$, $SCN^-$, $ClO_4^-$, $HgI_3^-$, $BF_4^-$, $PF_6^-$, $AsF_6^-$, $CF_3COO^-$, $CF_3SO_3^-$, and $CF_3(CF_2)_{1-8}SO_3^-$.

The ionizable salts of the present invention preferable have lattice energies of less than about 900 kJ/mol., more preferably less than about 825 kJ/mol, such that the Gibbs energy of solvation of the salt by the poly(alkylene oxide) is large enough to overcome the lattice energy of the salt, thereby causing the formation of a polymer solution. Generally, salts with such low lattice energies have anions with relatively large ionic radii, typically 181 Angstroms or larger, and further comprise a weak conjugate base. The anion can be selected from a strong acid, such as acids which are stronger than hydrochloric acid or acids which do not react with water other than by ionization.

The preferred ionizable salts have low chemical reactivity toward macromolecular material due to low nucleophilicity and low electrophilicity of their anion and cation respectively. The most preferable ionizable salts have a cation selected from lithium, sodium, and potassium and an anion selected from (1) higher halogens and pseudohalogens such as $Br^-$, $I^-$, and $SCN^-$; (2) complexes inorganic anions such as $ClO_4^-$; and (3) perfluorinated alkyl carboxylic and sulphonic anions such as $CF_3COO^-$, $CF_3SO_3^-$, and $CF_3(CF_2)_{1-8}SO_3^-$.

Regardless of the ionizable salt used, the polymer solution of the present invention preferably has a ratio of the number of oxygen atoms of ether linkages in poly(alkylene oxide) to the number of anions in the ionizable salt, O/X, is in the range from 4 to 150, and preferably in the range from 8 to 60. The ratio just described is based on an ionizable salt with a monovalent anion. Of course, salts with a divalent or trivalent anion can also be used. For any particular multivalent salt, the optimum ratio of anions to oxygen atoms of ether linkages can be determined using ordinary skill and experimentation. For example, for a divalent anion such as perfluoroglutarate, the limits of the ratio will generally be from about 8 to about 300.

The ionic conductivity can be further improved by incorporation with an inorganic electrolyte such as beta-alumina with lithium, sodium, potassium, or mixtures of lithium and aluminum iodides, or double silica-phosphate of zirconium and sodium, or double germinate of zinc and of lithium as described in U.S. Patent 4,303,748 to Armand et al.

The antistatic additives according to the present invention are preferably solid solutions of one or several ionizable salts in a poly(alkylene oxide). These polymer solutions are principally present in a solid state, wherein the ionizable salts do not exhibit their original melting point. The solid polymer solutions preferably have a surface resistivity within the range of from about $10^4$ to $10^{13}$ ohm/sq. and a volume resistivity of within the range of from about $10^4$ to $10^{13}$ ohm-cm.

The polymer electrolyte of this invention can be prepared by dissolving one or more polyalkylene oxides and one or more ionizable salts in a common solvent at ambient or elevated temperature followed by removal of the solvent. The common solvent is selected wherein the ionizable salt or salts are completely soluble and the polyalkylene oxide or oxides are at least partially soluble, most preferably both salts and polyalkylene oxides are completely soluble. The common solvent can be a single solvent or a mixed solvent having a high dielectric constant of at least 2 and preferably at least 4 at 25° C.

Examples of solvent having a high dielectric constant are water, methanol, tetrahydrofuran, ethylene carbonate, propylene carbonate, butyrolactone, dimethoxyethane, acetonitrile, dimethylformamide, sulforan, methylsulforan, etc. It is also preferable the selected solvent has a boiling point less than 150° C so that the subsequent removal of solvent can be easily carried out. The temperature of dissolving may be higher than the boiling point of the solvent and the dissolving is carried out under pressure.

However, the temperature of dissolving preferable is not in excess of 200° C so that the degradation of polyalkylene oxide is minimized. On the other hand, the temperature of the dissolving is preferably higher than the melting point of the polyalkylene oxide. The preferable temperature of the dissolving is in the range from 40° to 100° C. The removal of solvent can be carried out at elevated temperature, or under vacuum or both. Agitation may be applied to facilitate the dissolving. It is preferable to dissolve ionizable salt first in the common solvent than polyalkylene oxide. It is also preferable to have a sufficient amount of solvent so that the solution can be stirred.

In the preferred embodiment, the electrolyte material of the present invention is in a free flowing particulate form. The polymer electrolyte particles can be of any size, but preferably at least 70 wt % of total polymer electrolyte particles are within the range of about 0.1 mm to about 1.5 cm, more preferable at least 90 wt % of total polymer electrolyte particles are within the range of about 0.2 mm to about 10 mm. The polymer electrolyte particles of this invention can be prepared by precipitation of polymer electrolyte in a cement with a non-solvent. The precipitation may be carried out by slow addition of a cement of polymer electrolyte into a non-solvent while stirring. A suitable non-solvent is a solvent wherein both polyalkylene oxide and ionizable salt are insoluble but the solvent of the cement of polymer electrolyte is miscible. Exemplary of the non-solvent are $C_2$ - $C_{20}$ aliphatic or acyclic hydrocarbons such as butane, pentane,

hexane, heptane, octane, cyclohexane, cyclopentane, and the like. If desirable, a conventional antisticking or antilumping agent, such as silica gel, fumed silica, mistron vapor, and the like may be premixed with the cement before precipitation.

Since one of major applications of the polymer electrolytes of this invention is to be used as antistatic additives, the polymer electrolytes in a free flowing particulate form possess several highly desirable characteristics for the subsequent incorporation into polymeric material. Comparing with additives in a form of liquid, paste, or agglomerated mass, additives in a particulate form are more easy to incorporate into polymer material. Furthermore, additives in a particulate form eliminate many of the material storage, transporting, and handling problems.

The polymer electrolyte particles of the present invention have been surprisingly found to be excellent additives for many conventional plastic materials, wherein the particles readily blend into the plastic and provide the plastic with the electrostatic dissipative properties. The particles provide surface and volume resistivity and typically do not significantly interfere with the desired physical properties of the plastic with which it is blended.

The antistatic polymeric composition of this invention preferably comprises at least one antistatic additive of polymer electrolyte in the range of from about 3 to about 30% by weight and a polymeric material in the range of from about 70 to about 97% by weight. Standard symbols for polymeric materials are described in ASTM D4000. For example, the polymeric materials may be copolymers of styrene and/or $\alpha$-methyl styrene and acrylonitrile such as copolymers of styrene and acrylonitrile (SAN), terpolymers of styrene, acrylonitrile and diene rubber (ABS); copolymers of styrene and acrylonitrile modified with acrylate elastomers (ASA); and copolymers of styrene and acrylonitrile modified with ethylene propylene diene monomer (EPDM) rubber (ASE). Polystyrene or high impact polystryene may also be employed. Other polymeric materials include polyvinyl chloride (PVC), chlorinated polyvinyl chloride (CPVC), nylon (a polyamide), polycarbonate (PC), thermoplastic polyesters (TPES), including polybutylene terephthalate (PBT), polyethylene terephthalate (PET), aromatic polyester and polyether-ester segmented copolymers, such as Hytrel® by DuPont Corp.; polyurethane (PUR); and thermoplastic polyurethane (TPUR); polyphenylene oxide (POP); polyacetals (POM); copolymer of styrene and maleic anhydride (SMA); polymers of acrylic acid, methacrylic acid, acrylic esters, and methacrylic esters; polyolefins; polyamide-imide; polyacrylonitrile; polyarylsulfone; polyester-carbonate; polyether-imide; polyether-ketone (PEK); polyether-ether-ketone (PEEK); polyalphaether ketone (PAEK); polyether sulfone; polyphenylene sulfide; polysulfone; and mixtures thereof.

For the purpose and scope of this specification, the term of "polymeric material", which the antistatic additive of this invention incorporated, is expanded to include its closely analogous polymers and its derivatives, and its copolymers. For example, by PVC it is meant polyvinyl chloride, or its closely analogous polymers, such as polyvinyl bromide, polyvinylidene chloride and the like or its derivatives, such as chlorinated polyvinyl chloride and the like, or vinyl chloride copolymers or terpolymers having vinyl chloride as the major component monomer greater than 50% by weight. These compositions include but are not limited to comonomers of vinyl alkanoates such as vinyl acetate and the like, vinylidene halides such as vinylidene chloride, alkyl esters of carboxylic acids such as acrylic acid, ethyl acrylate, 2-ethylhexyl acrylate, and the like, unsaturated hydrocarbons such as ethylene, propylene, isobutylene, and the like, allyl compounds, such as allyl acetate, and the like.

Also for example, the term "terpolymers of styrene, acrylonitrile and butadiene (ABS)" originally denoted a polymer primarily constructed from acrylonitrile, butadiene and styrene, this definition has been expanded to include polymer resins in which these components have been replaced in whole or in part by similar analogous compounds. Exemplary of analogous compounds of acrylonitrile are methacrylonitrile, ethacrylonitrile, halogenated acrylonitriles, and the like; exemplary of analogous compounds of styrene are alpha-methyl styrene, chlorostyrene, vinyl toluene and the like; exemplary of analogous compounds of butadiene is isoprene, and the like.

The polymer electrolytes of this invention are also ideal antistatic additives for polymer blends which are the physical combination of two or more polymeric resins systems where at least two of the polymers are present in concentrations greater than 5%. The principal reason for blending is to improve the product cost and/or specific property and process performance of a polymer for a specific end-use application. Exemplary polymer blends are ABS/PVC known commercially as Cycovin® by Borg-Warner, Lustran® by Monsanto, and Polyman® by A Schulman Inc.; ABS/PC known commercially as Bayblend® by Mobay; Pluse® by Dow Chemical; Triax® by Monsanto; and Proloy® by Borg-Warner; ABS/nylon commercially known as Elemid® by Borg-Warner, and Triax® by Monsanto; ABS/SMA known as Cadon® by Monsanto; PVC/ASA known as Geloy® by General Electric; PVC/acrylic known as DKE® by Sumitomo and Kydex® by Rohm & Haas; PVC/urethane known as Vythene® by Alpha Chem & Plastics; PVC/CPE called Hostalite® by

American Hoechst; PVC/nitrile rubber called Vynite® by Alpha Chem & PLastics, Hycar® by BFGoodrich, and Paracril® by Uniroyal; PVC/EVA called Sumifraft® by Sumitomo, and Tennea® Tenneco; acetal/elastomer commercially known as Celcon® by Celanese, Duraloy® by Celanese, Delrin® by DuPont, and Ultraform® by BASF; PBT/PET known as Celanex® by Celanese and Valox® by General Electric; PBT/elastomer called Duralox®, Gafite® and Gaftuf® by Celanese, Valox® by General Electric, Ultradur® by BASF; PBT/SMA called Dylark® by Arco Chemicals; PET/PMMA called Ropet® by Rohm & Haas; PC/PBT/elastomer known as Xenoy® and Valox® by General Electric; PC/PE known as Lexan® by General Electric and Merlon® by Mobay; PC/PET known as Xenoy® by General Electric and Makroblend® by Mobay; PC/SMA known as Arloy® by Arco Chemical; PC/TPU known as Texin® by Mobay; PC/nylon known as Dexcarb® by Dexter Plastics; POP/high impact PS known as Noryl® by General Electric and Prevex® by Borg-Warner; POP/polyamide known as Noryl® by General Electric; SMA/high impact PS called Dylark® by Arco Chemical; Nylon/elastomer called Ultramid® by BASF; Nylon/ethylene copolymer called Capron® by Allied Chemical, Nycoa® by Nylon Corp of America, Grilon® by Emser Industries; Nylon/EPDM commercially known as Zytel® by DuPont; Nylon/PE known as Selar® by DuPont.

Any plastic in need of an antistatic agent can be employed along with the polymer electrolyte of the present invention. However, the antistatic properties are more effective with certain plastics and thus the properties are not uniform between polymeric materials when a constant amount is employed. Additionally, the composition of the polymer electrolyte also effects the antistatic properties.

The composition of antistatic polymeric materials of the present invention can be prepared by mechanical mixing under the influence of heat and/or pressure by a variety of methods. The actual method chosen will depend to some extent on the nature of the polymeric materials and on the desired final physical form of antistatic polymeric materials. Antistatic additives of this invention can be incorporated into polymeric materials together with other compounding ingredients, such as lubricants, plasticizer, stabilizer, fillers, impact modifiers, and processing aids, or incorporated separately before or after the polymeric materials are compounded. A well-dispersed composition is especially preferred because moldability and antistatic properties are especially enhanced and physical properties are less impaired. Consequently, a compatibilizing agent may be added to improve compatibility of polymer electrolyte with polymer materials, for example, as described in U.S. Patent 4,857,590 to Gagger et al.

An ordinary mixer, roll mill, or calender, may be used to incorporate antistatic additives of this invention into polymeric materials to form entirely satisfactory blends at convenient and customary operating conditions. For example, antistatic additives of this invention can conveniently be incorporated into a polymeric material by a biaxial extruder and molded or extruded directly into a final product, or it can be extruded in the form of rods which are chopped up into pellets and used in subsequent operations. Another example is to use a Banbury mixer to give a moldable composition, then the composition is rolled by a mill to form a thick sheet and cubic pellets of the composition are obtained subsequently using a screen granulator. Final articles of antistatic compositions can be formed by compression molding, injection molding, blow molding, extrusion, calendering and the like into articles such as pellets, sheets, films, bars, tubes, filaments, specially shaped articles and the like.

The polymer electrolytes of this invention are also useful for external applications to control electrostatic problems. The antistatic composition of this invention suitable for external applications preferably comprise (1) a polymer electrolyte, (2) a film-forming resin component, and (3) a solvent wherein the weight ratio of a film-forming resin component to a polymer electrolyte is in the range from about 0/100 to 97/3 and the solvent is in the range from 70 to 99% by weight of the total antistatic composition.

The film-forming resin component preferably is polyvinyl chloride, vinyl chloride/vinyl acetate copolymer, vinyl chloride/vinyl acetate/vinyl alcohol terpolymer, polyurethane, ethylene/vinyl acetate, polystyrene, epoxy resin, phenoxy resin, polyether resin, cellulose ester such as cellulose nitrile, and the like.

The antistatic composition of this invention suitable for external applications can be coated on a wide variety of supports. The support can be a number of materials which can take a number of forms. For example, the compositions cans be coated on polymeric materials such as poly(ethylene terephthalate), cellulose acetate, polystyrene, polyethylene, polypropylene, ABS, PVC, and the like. The compositions can also be coated on other supports such as glass, paper (including resin-coated), metals, fibers, and the like.

The composition of the present invention can be applied to the support using any suitable method. For example, by spray coating, fluidized bed coating, dip coating, doctor blade coating, extrusion hopper coating, gravure coating, reverse coating, knife coating, bar coating, and the like.

A flexible film coated with the antistatic composition of this invention can be used to form a laminated sheet material for packages or envelopes for electrically sensitive components as described in U.S. patents 4,699,830; 4,424,900; 4,154,344; 4,738,882, 4,764,425.

EXAMPLES

The following examples are given to further illustrate the present invention. The antistatic properties of polymer blend composition are determined under controlled conditions at 25 °C by surface and volume resistivity at 50% R.H. (relative humidity) and static decay time at 15% R.H. The samples were also conditioned at least 48 hours prior to measurement.

Surface and volume resistivity testing is conducted in accordance with ASTM D257 with an Electrometer (model 617) equipped with a high voltage supply (model 247) and a resistivity adapter (model 6105) all from Keithley Instruments, Inc. The adapter compresses an upper circular electrode encircled with a ringing electrode. A sheet sample (3.5 inches in diameter and 1/8-1/16 inch thick) was placed between the upper and lower electrodes, and a voltage of 500 volts was applied between the electrodes. After 60 seconds, the current was recorded from the Electrometer and converted into surface resistivity in ohms per square or volume resistivity in ohm $cm^{-1}$ using the equation derived from the dimensions of the electrodes. To measure surface resistivity, the upper electrodes provide guarding; positive potential of the test voltage is applied to the lower circular electrode and negative potential is applied to the lower encircled center electrode. To measure volume resistivity, positive potential of the test voltage is applied to the upper electrodes provided guarding and negative potential is applied to the lower encircled center electrode.

The end use of the polymeric antistatic material will determine the desired antistatic properties. For example, sophisticated electronic equipment would require a higher degree to antistatic properties than carpet or articles for dust prevention. Accordingly, different standards have been developed for specific end use applications. For example, electrostatic behavior has been characterized by the Department of Defense in publication DOD-HDBK-263 in terms of surface resistivity. Materials with a surface resistivity in the range of $10^9$-$10^{14}$ ohms per square at 50% R.H. are antistatic. Materials with a surface resistivity greater than $10^{14}$ are insulators. In another example, electrostatic behavior has also been characterized by EIA (Electronic Industries Association) in a publication "ETA Interim Standard EIA-541: Packaging Material Standards for ESD Sensitive Items", 1988, in terms of surface resistivity. Materials with a surface resistivity in the range of $10^5$-$10^{14}$ ohms per square at 50% R.H. are "dissipative". Materials with a surface resistivity equal to or greater than $10^{12}$ are insulative.

Different standards have also been developed for the static decay test. The static decay test is carried out in accordance with Federal Test Method Standard 101B, Method 4046.1, "Electrostatic Properties of Materials" with a Static Decay Meter, model 406C obtained from Electro-Tech Systems, Inc. Static decay is a measure of the ability of a material, when grounded, to dissipate a known charge that has been induced on the surface of the material. A sheet sample (3" x 6") with 1/8-1/16 inch thickness is placed between clamp electrodes contained in a Faraday cage. A 5,000 volt charge is applied to the surface of the specimen and the time in seconds required to dissipate the charge to 500 volts (10% of its initial value) or to 50 volts (1% of its initial value), after a ground is provided, is then measured. Highly insulative materials will not accept a full charge of 5,000 volts on their surface or show residual charge before applying a charge. In both instances, a static decay test cannot apply and the materials are indicated in the Table as being insulators. The National Fire Protection Association in NFPA, code 56A, "The Standard for the Use of Inhalation Anesthetics" covers products used in the hospital operating room and in hazardous environments. It requires that the applied charge drop to 10% of its initial value within 0.5 seconds at 50% relative humidity in order to qualify for use in hospital operating rooms and other hazardous environments. According to the same EIA-541 publication, the material shall be considered acceptable if the decay rate is less than two seconds from 5000 to 50 volts at 15% R.H.

Generally, a more conductive material with lower surface resistivity will show better antistatic properties. However, many cases have been found where static decay rate is not always related to the surface resistivity of the materials. One of the main reasons is believed that static decay is not only by conduction, but also by discharge static electricity into the air and dependent on the capacitance of the material. Consequently, materials having same surface resistivity might have different decay rate when both are measured at the same conditions. However, it becomes more complicated because specifications ask for the measurements of electrostatic properties to be carried out at different humidity conditions - surface resistivity at 50% R.H. whereas decay rate is at 15% R.H. Since most antistats are sensitive to humidity, materials classified as "dissipative" according to surface resistivity measured at 50% R.H. may not function well at 15% R.H. Surface resistivities of some commercial antistatic thermoplastics have been measured at 60% R.H. Most of them are dissipative at 60% R.H. (surface resistivity less than $10^{12}$ ohm/sq), but not at 20% R.H. Consequently, decay rate measured at 15% R.H. is generally a more consistent yardstick for the antistatic properties of the material.

Physical tests are carried out in accordance with ASTM D-638 for tensile and elongation and ASTM D-2240 for Durometer Hardness "D".

Examples 1-4

Solid polymer solutions of an inorganic salt in a copolymer of EO (ethylene oxide) were prepared by dissolving both LTFM (lithium trifluoromethanesulfonate) and a copolymer of EO/PO (ethylene oxide/propylene oxide) in a common solvent, THF, at 80 °C for eight hours with stirring. The concentration of the copolymer in THF is about 5 wt %. After dissolving, the THF was removed and a polymer solution was obtained as a solid. LTFM was obtained from Industrial Chemical Products Division of 3M under a trade name of Fluorad FC-122. Copolymers of EO/PO were prepared with a coordination catalyst based on partially hydrolyzed triethylaluminum as described in European Patent Application 287092 A2. The composition of solid polymer solutions of these examples are set forth in Table I. LTFM copolymers of EO/PO, and THF are expressed in weight parts and the concentrations of an inorganic salt in the polymer solution are expressed as the ratio of the number of oxygen atoms of the copolymer of EO/PO to the number of lithium atoms of LFTM, oxygen/Li.

Table I

Copolymer of EO/PO with 74 wt% of EO

| | Example 1 | Example 2 | Example 3 | Example 4 |
|---|---|---|---|---|
| Oxygen/Li | 256 | 128 | 64 | 32 |
| THF | 500 | 500 | 500 | 500 |
| EO copolymer | 28.2 | 28.2 | 28.2 | 28.2 |
| LTFM | 0.365 | 0.73 | 1.46 | 2.92 |

Examples 5-7 (Comparative)

In these comparative examples, ABS compound was mixed with a copolymer of EO/PO with 74 wt% of EO in a Banbury mixer heated at 185° C with hot oil. After mixing is completed (about 5 min.), a 6"x6"x1/8" sheet sample was press-molded at 185° C and 30,000 psi. The amounts EO copolymer are expressed in phr (weight parts per 100 weight parts of the ABS resin compound). The ABS compound is Cyclolac KJW 1000 (natural) obtained from GE Plastics. Copolymer of EO/PO has an inherent solution viscosity of 2.27 as determined on a solution of 0.25 g of polymer in 100 ml of toluene with capillary viscometer at 25° C according to ASTM D2857 and a weight average molecular weight about 5.4 x $10^5$ as determined by GPC in THF and Mooney viscosity ($ML_{1+4}$ at 100° C) of 59 according to ASTM D1646. ABS compounds with the incorporation of a copolymer of EO up to 8 wt% show no antistatic properties. The results of these

examples are set forth in Table II.

Table II.

| | Example 5 | Example 6 | Example 7 |
|---|---|---|---|
| ABS compound | 100 | 100 | 100 |
| EO copolymer | 0 | 6 | 8 |
| Decay Rate from 5KV to 50V at 15% R.H., sec. | I | I | I |
| Surface Resistivity at 50% R.H., ohm/sq. | $>10^{15}$ | $1.2x10^{15}$ | $3.6x10^{13}$ |
| Volume Resistivity at 50% R.H., ohm-cm | $>10^{15}$ | $1.3x10^{15}$ | $4.8x10^{14}$ |
| Tensile, psi | 5000 | 2800 | 3700 |
| % Elongation | 2 | 1 | 0 |
| Durometer hardness "D" | 73 | 65 | 70 |

I: highly insulative, cannot be measured by the instrument.

Examples 8-10

In these examples, polymer electrolytes based on an EO copolymer having 82 wt% EO with various amounts of LTFM were examined. The effect of LTFM concentration in the polymer electrolytes was studied at 6 wt% of polymer electrolyte in an ABS compound. ABS compound was mixed with a polymer electrolyte in a Banbury mixer heated at 185°C with hot oil. After mixing is completed (about 5 min.), a 6"x6"x1/8" sheet sample was press-molded at 185°C and 30,000 psi. The amounts EO copolymer are expressed in phr (weight parts per 100 weight parts of the ABS resin compound). The ABS compound is Cyclolac KJW 1000 (natural) obtained from GE Plastics. Copolymer of EO/PO has an inherent solution viscosity of 1.76 as determined on a solution of 0.25 g of polymer in 100 ml of toluene with capillary viscometer at 25°C according to ASTM D2857 and a weight average molecular weight about 3.7 x $10^5$ as determined by GPC in THF and a Mooney viscosity ($ML_{1+4}$ at 100°C) of 58 according to ASTM D1646. The results of these examples are set forth in Table III.

Table III

| | Example 8 | Example 9 | Example 10 |
|---|---|---|---|
| EO/PO Copolymer with 82 wt% of EO | | | |
| Oxygen/Li | 64 | 32 | 16 |
| ABS compound | 94 | 94 | 94 |
| Polymer electrolyte | 6 | 6 | 6 |
| Decay Rate from 5KV to 50V at 15% R.H., sec. | 1.73 | 1.48 | 0.68 |
| Tensile, psi | 4000 | 4250 | 4250 |
| Durometer hardness "D" | 68 | 63 | 75 |

Examples 11-14

In these examples, polymer electrolytes of Examples 1-4 based on an EO copolymer with 74 wt% of EO with various amounts of LTFM were examined. The effect of LTFM concentration in the polymer electrolytes was studied at 8 wt% of polymer electrolyte in an ABS compound. ABS compound was mixed with a polymer electrolyte in a Banbury mixer heated at 185°C with hot oil. After mixing is completed (about 5 min.) a 6"x6"x1/8" sheet sample was press-molded at 185°C and 30,000 psi. The amounts EO copolymer are expressed in phr (weight parts per 100 weight parts of the ABS resin compound). The ABS compound is Cyclolac KJW 1000 (natural) obtained from GE Plastics. Copolymer of EO/PO has an inherent solution viscosity of 2.27 as determined on a solution of 0.25 g of polymer in 100 ml of toluene with capillary viscometer at 25°C according to ASTM D2857 and a weight average molecular weight about 5.4 x l0 as determined by GPC in THF and a Mooney viscosity ($ML_{1+4}$ at l00°C) of 59 according to ASTM Dl646. The results of these examples are set forth in Table IV.

Table IV

| | Example 11 | Example 12 | Example 13 | Example 14 |
|---|---|---|---|---|
| EO/PO Copolymer with 74 wt% of EO | | | | |
| Oxygen/LI | 256 | 128 | 64 | 32 |
| ABS compound | 92 | 92 | 92 | 92 |
| Polymer Electrolyte | 8 | 8 | 8 | 8 |
| Decay Rate from 5KV to 50V at 15T R.H., sec. | 3.4 | 0.42 | 0.05 | 0.22 |
| Surface Resistivity at 50% R.H., ohm/sq. | $1.1 \times 10^{13}$ | $2.5 \times 10^{11}$ | $1.4 \times 10^{11}$ | $4.0 \times 10^{11}$ |
| Volume Resistivity at 50% R.H., ohm-cm | $1.7 \times 10^{14}$ | $1.6 \times 10^{13}$ | $2.4 \times 10^{12}$ | $1.0 \times 10^{13}$ |
| Tensile, psi | 3100 | 3100 | 2460 | 3750 |
| Durometer hardness "D" | 63 | 63 | 68 | 68 |

EXAMPLES 15-16

In these examples, polymer electrolytes in a free flowing particulate form were prepared. THF solutions of polymer electrolytes based on EO/PO copolymer (EO = 80 wt %) were prepared in a same manner as described in Examples 1-4. Polymer electrolytes were then precipitated by adding THF solutions into a beaker containing about 1000 ml of heptane while stirring. After separating, polymer electrolytes were washed once with 500 ml of heptane. After decanting, wet polymer electrolytes were spread in a polyethylene lined pan and dried under vacuum at ambient temperature over night. Particle size distribution of polymer electrolytes is shown in Table V.

Table V

| | Example 15 | Example 16 |
|---|---|---|
| Oxygen/Li | 32 | 64 |
| EO/PO copolymer, g | 50 | 50 |
| LTFM, g | 5.2 | 2.6 |
| THF, g | 500 | 500 |
| **Particle Size Distribution (Normalized Percentage)** | | |
| Sieve Size (mm) | | |
| 4.76 | 23.3 | 11.5 |
| 2.00 | 71.2 | 68.6 |
| 1.00 | 5.5 | 18.4 |
| 0.50 | 0.0 | 0.5 |

EXAMPLES 17-40

Various solid polymer electrolytes were prepared in a same manner as described in Examples 1-4, and evaluated as a coating materials on polyester Mylar film at 15% R.H. for surface resistivity and static decay rate.

All examples show that the incorporation of an ionizable salt at oxygen/metal ratio in the range from 4.0 to 64 substantially improves the antistatic properties comparing polyalkylene oxide without salt as shown in Table VI.

TABLE VI

ANTISTATS COATING OF POLYETHER/SALT COMPLEXES

| Example | Polyether | EO wt.% | Oxygen Salt | Oxygen Metal | MILS | 15% R.H. ohm/sq | 15% R.H. Decay Rate Sec 5KV to 50V |
|---|---|---|---|---|---|---|---|
| 17 | EO | 100 | LTFMS | 8.0 | 0.20 | 1.0E+11 | 0.20 |
| 18 | EO/PO | 77 | -- | -- | 0.35 | 1.0E+11 | 0.25 |
| 19 | EO/PO | 77 | LTFMS | 16.7 | -- | 1.0E+08 | -- |
| 20 | EO/PO | 77 | LTFMS | 8.0 | 0.20 | 1.0E+08 | 0.01 |
| 21 | EO/PO | 77 | LTFMS | 6.0 | 0.22 | 1.0E+08 | 0.01 |
| 22 | EO/PO | 77 | LTFMS | 4.0 | 0.36 | 1.0E+10 | 0.05 |
| 23 | EO/PO | 77 | LTFMS | 2.0 | -- | >1.0E+12.5 | Insulator |
| 24 | EO/PO | 60 | -- | -- | 0.17 | >1.0E+12.5 | 5.60 |
| 25 | EO/PO | 60 | LTFMS | 32.0 | 0.12 | 1.0E+09 | 0.01 |
| 26 | EO/PO | 32 | LTFMS | | 0.27 | >1.0E+12.5 | 5.80 |
| 27 | EO/PO | 32 | LTFMS | 6.40 | 0.40 | 1.0E+09 | 0.01 |
| 28 | EO/PO | 32 | LTFMS | 32.0 | 0.35 | 1.0E+09 | 0.01 |
| 29 | EO/PO | 32 | LTFMS | 8.0 | 0.353 | 1.0E+09 | 0.01 |
| 30 | PO (Parel) | 0 | | | 0.34 | >1.0E+12.5 | Insulator |
| 31 | PO (Parel) | 0 | LTFMS | 64.0 | 0.16 | 1.0E+10 | 0.06 |
| 32 | PO (Parel) | 0 | LTFMS | 32.0 | 0.20 | 1.0E+10 | 0.02 |
| 33 | PO (Parel) | 0 | LTFMS | 16.0 | 0.15 | 1.0E+10 | 0.02 |
| 34 | PO (Parel) | 0 | LTFMS | 8.0 | 0.40 | 1.0E+10 | 0.02 |
| 35 | PO (Parel) | 0 | LTFMS | 4.0 | 0.12 | >1.0E+12.5 | Insulator |
| 36 | PO (Parel) | 0 | LTFMS | 2.0 | 0.13 | >1.0E.12.5 | Insulator |
| 37 | EO/PO | 77 | KSCN | 4.0 | 0.32 | 1.0E+10 | 0.04 |
| 38 | EO/PO | 77 | KSCN | 8.0 | 0.37 | 1.0E+09 | 0.01 |
| 39 | EO/PO | 77 | LiClO4 | 4.0 | 0.40 | 1.0E+10 | 0.08 |
| 40 | EO/PO | 77 | LiClO4 | 8.0 | 0.35 | 1.0E+09 | 0.02 |

## Claims

1. An electrostatic dissipative ("ESD") additive which can be easily incorporated into a plastic material to provide the plastic material with ESD properties by means of both surface and volume resistivity, said ESD additive comprising:
a macromolecular polyalkylene oxide base material having an inherent solution viscosity of greater than

0.25 g/ml as determined using a solution comprising 0.25 grams of the polymer in 100 milliliter of toluene by means of a capillary viscometer at 25 °C according to ASTM D2857 or a Mooney viscosity number ($ML_{1+4}$ at 100 °C) greater than 3 according to ASTM D1646, and at least one organic or inorganic ionizable salt, wherein the ratio of the number of oxygens in the polyalkylene oxide to the number of anions in the ionizable salt is in the range of about 4:1 to about 150:1, said ESD additive having a volume resistivity of about $10^2$ to about $10^{13}$ ohm-cm and a surface resistivity in the range from $10^2$ to $10^{13}$ ohm/sq. according to ASTM D257-78.

2. The ESD additive of Claim 1 wherein the additive is in a free flowing particulate form and are at least about 70% by weight of the particles in the range of about .1 mm to about 1.5 cm in diameter.

3. The ESD additive of Claim 2 wherein the macromolecular material of polyalkylene oxide is further defined as comprising about 10% to 100% by weight alkylene oxide repeated units selected from
(A) mono-substituted 1,2-epoxides having the structure

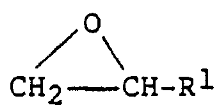

I

wherein, $R^1$ is selected from the group consisting of hydrogen, $C_1$-$C_{20}$ alkyl, alkenyl, haloalkyl and haloalkenyl; and $C_6$-$C_{20}$ aryl, alkylaryl, alkenylaryl, aralkyl and aralkenyl; and
(B) aliphatic or aromatic glycidyl ethers having the structure

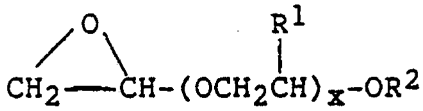

II

wherein, $R^2$ is selected from the group consisting of hydrogen, $C_1$-$C_{20}$ alkyl, haloalkyl, and haloalkenyl; and $C_6$-$C_{20}$ aryl, alkylaryl, alkenylaryl, aralkyl, and aralkenyl; and wherein x is an integer from 0 to 30.

4. The ESD additive of Claim 3 wherein the macromolecular material comprises, wholly or partially, ethylene oxide, propylene oxide, or epichlorohydrin repeated units.

5. The ESD additive of Claim 3 wherein the macromolecular material comprises a copolymer of ethylene oxide and propylene oxide or epichlorohydrin.

6. The ESD additive of Claim 3 wherein the polyalkylene oxide copolymer is derived from the polymerization of one or more cyclic ethers having a three-membered ring selected from
(A) mono-substituted 1,2-epoxides having the structure

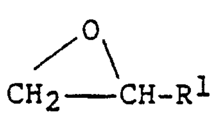

wherein, $R^1$ is selected from the group consisting of hydrogen, $C_1$-$C_{20}$ alkyl, alkenyl, haloalkyl and haloalkenyl; and $C_6$-$C_{20}$ aryl, alkylaryl, alkenylaryl, aralkyl and aralkenyl; and
(B) aliphatic or aromatic glycidyl ethers having the structure

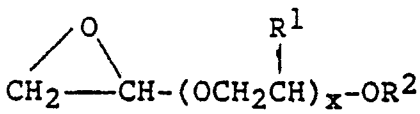

wherein, $R^2$ is selected from the group consisting of $C_1$-$C_{20}$ alkyl, alkenyl, haloalkyl, and haloalkenyl;

and $C_6$-$C_{20}$ aryl, alkylaryl, alkenylaryl, aralkyl, and aralkenyl; and wherein x is an integer from 0 to 30.

**7.** The ESD additive of Claim 3 wherein the polyalkylene oxide is a polyether copolymer derived from the copolymerization of one or more three-membered ring cyclic ethers selected from mono-substituted 1,2-epoxides and aliphatic or aromatic glycidyl ethers with one or more three-membered ring cyclic ethers selected from di-substituted and tri-substituted epoxides.

**8.** The ESD additive of Claim 3 wherein the polyalkylene oxide is a polyether copolymer derived from the copolymerization of one or more three-membered ring cyclic ethers selected from mono-substituted 1,2-epoxides and aliphatic or aromatic glycidyl ethers with one or more cyclic ether selected from 1,3-epoxide, 1,5-epoxide, 1,6-epoxide, and their derivatives.

**9.** The ESD additives of Claim 3 wherein the polyalkylene oxide is a polyether-ester copolymer derived from the copolymerization of one or more three-membered ring cyclic ethers selected from mono-substituted 1,2-epoxides and aliphatic or aromatic glycidyl ethers with one or more cyclic esters containing up to 25 carbon atoms.

**10.** The ESD additives of Claim 3 wherein the polyalkylene oxide is a polyether-acetal copolymer derived from the copolymerization of one or more three-membered ring cyclic ethers selected from mono-substituted 1,2-epoxides and aliphatic or aromatic glycidyl ethers with one or more cyclic acetals containing up to 25 carbon atoms.

**11.** The ESD additives of Claim 3 wherein the polyalkylene oxide is a block copolymer comprising one or more blocks of ethylene oxide or propylene oxide homopolymers or copolymers of ethylene oxide and optionally one or more blocks derived from anionic polymerizable monomers selected from styrene, butadiene, methacrylic acid, cyclic esters, and their derivatives and analogous monomers, and cyclic ethers other than ethylene oxide and propylene oxide.

**12.** The ESD additives of Claim 3 wherein the polyalkylene oxide is a graft copolymer with pendant chains selected from polyalkylene oxides comprising:
(a) a hydrocarbon backbone prepared by free-radical polymerization of a macromer of polyalkylene oxides with at least an ethylenically unsaturated monomer;
(b) a polysiloxane backbone; or
(c) a polyphosphazene backbone.

**13.** The ESD additives of Claim 3 wherein the polyalkylene oxide is a graft copolymer having a polyether backbone with pendant chains comprising repeated units of at least one ethylenically unsaturated monomer prepared by free-radical polymerization of at least one ethylenically unsaturated monomer in the presence of a polyalkylene oxide.

**14.** The ESD additives of Claim 3 wherein the polyalkylene oxide is a segmented copolymer of either
(a) a polyurethane,
(b) a poly(ether-ester) segmented copolymer, or
(c) a poly(ether-ester-amide) segmented copolymer.

**15.** The ESD additive of Claim 1 wherein the ionizable salt is represented by the following formula:

$$(M^{+a})_b(X^{-b})_a$$

in which $M^{+a}$ is a cation, such as a metal or ammonium ion and $x^{-b}$ is an anion of a strong acid wherein both a and b are integers from 1 to 3.

**16.** The ESD additive of Claim 15 wherein the ionizable salt comprises a cation derived from Group IA, Group IIA Group IIIA, Group IB, and Group IIB metals or is an ammonium ion and the anion $X^{-b}$ is an anion of a strong acid.

**17.** The ESD additive of Claim 16 wherein the ionizable salt comprises a cation selected from lithium, sodium, and potassium and an anion selected from (1) higher halogens and pseudohalogens such as $Br^-$, $I^-$, and $SCN^-$; (2) complexes inorganic anions such as $ClO_4^-$ ; and (3) perfluorinated alkyl carboxylic and sulphonic anions such as $CF_3COO^-$, $CF_3SO_3^-$ , and
$CF_3(CF_2)_{1-8}SO_3^-$ .

**18.** A method of manufacturing an electrostatic dissipative material comprising the steps of:
melt mixing or blending the ESD additive of Claim 1 with a polymeric material wherein the additive has a weight average molecular weight as determined by GPC from about 10,000 to about 50,000,000.

**19.** A method of manufacturing an ESD additive in a free-flowing particulate form comprising the steps of:
(a) dissolving a polyalkylene oxide polymeric material and ionizable salt in a common solvent,
(b) causing the polyalkenyl oxide material and ionizable salt to precipitate out of solution, and
(c) drying the precipitate.

**20.** An electrostatic dissipative material comprising the ESD additive of Claim 1 and a polymeric material.

**21.** An electrostatic dissipative ("ESD") material useful for external applications comprising
(a) the ESD additive of Claim 1, and
(b) a solvent
wherein the solvent is in the range from 70 to 99% by weight of the total electrostatic dissipative material.

**22.** The ESD material of Claim 21 further comprising a film-forming resin component wherein the ratio of the film-forming component to the ESD additive is from about 0:100 to about 97:3 by weight.

European Patent Office

# EUROPEAN SEARCH REPORT

Application Number

**EP 90 12 4712**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 282 985 (THE B.F. GOODRICH CO.)<br>* Page 3, lines 50-56; page 4, lines 27-34; page 4, line 49 - page 5, line 5; page 6, lines 32-38; page 10, lines 25-48 * | 1-8, 15-18, 20-22 | C 08 L 101/00<br>C 09 K 3/16 //<br>(C 08 L 101/00<br>C 08 L 71:02<br>) |
| D,Y | EP-A-0 247 355 (BORG-WARNER CHEMICALS INC.)<br>* Page 3, lines 13-25; page 6, line 23 - page 7, line 28 * | 1-8, 15-18, 20-22 | |
| Y | US-A-4 872 910 (J.M. ESHLEMAN)<br>* Abstract; column 2, lines 6-32,40-57 * | 1-8, 15-18, 20-22 | |
| A,D | GB-A-2 139 230 (KOKOBU RUBBER IND.)<br>* Abstract; page 2, lines 6-16,26-39; page 3, example 2 * | 1,3,4,6, 15-18,20 | |

TECHNICAL FIELDS SEARCHED (Int. Cl.5)

C 08 L
C 09 K
C 08 K

The present search report has been drawn up for all claims

| Place of search | Date of completion of search | Examiner |
|---|---|---|
| The Hague | 19 March 91 | MAZET J.-F. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document